# EUROPEAN PATENT SPECIFICATION

(11) **EP 4 435 812 B1**
(45) Date of publication and mention of the grant of the patent: **14.10.2026**
(21) Application number: 24163829.5
(22) Date of filing: 15.03.2024
(51) Int. Cl.: H01G 4/012, H01G 4/232, H01G 4/30, H01G 2/06, H01G 4/12

(54) **ELECTRONIC COMPONENT**
ELEKTRONISCHES BAUELEMENT
COMPOSANT ÉLECTRONIQUE

(30) Priority: 17.03.2023 KR 20230035231
(43) Date of publication of application: 25.09.2024
(73) Proprietor: Samsung Electro-Mechanics Co., Ltd., Suwon-si, Gyeonggi-do 16674 (KR)
(72) Inventor: Cho, Beomjoon, 16674 Suwon-si, Gyeonggi-do (KR)
(74) Representative: Grünecker Patent- und Rechtsanwälte PartG mbB

(56) References cited:
- CN-B- 108 010 721
- JP-A- 2018 129 499
- KR-A- 20180 130 299
- US-A1- 2011 075 317
- US-A1- 2018 027 656
- US-A1- 2019 066 922
- US-A1- 2019 172 648

## Description

### BACKGROUND

### (a) Technical Field

The present disclosure relates to an electronic component, and more particularly, to a multilayer ceramic capacitor.

### (b) Description of the Related Art

A multilayer ceramic capacitor (MLCC) refers to a chip-shaped condenser mounted on a circuit board of various types of electronic products and configured to be charged with electricity or discharged. The multilayer ceramic capacitor has a structure in which internal electrodes having opposite polarities are alternately stacked one by one with dielectric layers (ceramic layers) interposed therebetween.

Recently, with the trend of manufacturing electronic products having high performance and multiple functions, the use of multilayer ceramic capacitors has increased. With the progress of miniaturization and integration of electronic components, there is a consistently increasing need for multilayer ceramic capacitors having small scales and high capacities. However, a technology for increasing the number of stacked internal electrodes or thinning a dielectric layer, which is a representative method capable of increasing capacitance, gradually approaches a technical limitation, which slows down the improvement.

Therefore, in order to increase capacitance in other aspects, there has been proposed a method of decreasing volumes of elements irrelevant to the implementation of capacity among constituent elements of the multilayer ceramic capacitor and increasing volumes of parts that contribute to the increase in capacity to the extent of the decreased volumes. For example, a representative method provides a configuration in which a connection electrode penetrates a dielectric layer and a plurality of internal electrodes.

The connection electrode may be manufactured by a process of forming through-holes in the dielectric layer and the plurality of internal electrodes, filling the through-holes with conductive materials, and then performing a sintering process. However, in this case, gaps may be formed between the connection electrode and the through-holes because of a difference in sintering contraction percentage between the dielectric layer, the internal electrode, and the conductive material, and outside moisture may penetrate through the gaps, which degrades moisture resistance reliability.
US 2019/066922 A1 discloses a capacitor component including a body including an active layer and an upper cover and a lower cover disposed on an upper part and a lower part of the active layer, respectively; first internal electrodes and second internal electrodes disposed inside the active layer; a first active via and a second active via extending in a thickness direction of the active layer to be connected to the first and second internal electrodes, respectively; first and second cover vias extending in a thickness direction of the lower cover to be electrically connected to the first and second active vias and disposed at an interval narrower than an interval between the first and second active vias; and first and second lower electrodes disposed in a lower surface of the lower cover to be connected to the first and second cover vias, respectively.
KR 2018 0130299 A discloses a multilayer ceramic capacitor which simultaneously has a high capacity and a low equivalence series inductance. The multilayer ceramic capacitor comprises: a capacity layer including a dielectric layer and first and second internal electrodes arranged by having the dielectric layer interposed therebetween; a protection layer arranged on one surface of the capacity layer; a first connection electrode filled in a plurality of first vias passing through the protection layer; and a second connection electrode passing through the capacity layer, and filled in a second via connected to the first via. A diameter of the first via is greater than that of the second via.

### SUMMARY

It is the object of the present invention to provide electronic components with improved moisture resistance reliability.

This object is solved by the subject matter of the appended independent claims which define the present invention.

Preferred embodiments of the present invention are defined by the appended dependent claims.

The present disclosure has been made in an effort to provide an electronic component capable of improving moisture resistance reliability by preventing outside moisture from penetrating into the electronic component through a connection electrode in a configuration in which the connection electrode is used to electrically connect a plurality of internal electrodes.

An electronic component according to an embodiment includes a capacitor body, a connection electrode, and an external electrode. The capacitor body includes a dielectric layer, a plurality of internal electrodes disposed in a stacking direction and spaced apart from one another with the dielectric layer interposed therebetween, and first and second surfaces facing each other in the stacking direction. The connection electrode includes a main junction portion extending in the stacking direction and configured to penetrate the plurality of internal electrodes, a bypass portion connected to the main junction portion and extending in a planar direction in the dielectric layer, and an end extending from the first surface. The connection electrode is connected to the plurality of internal electrodes in the capacitor body. The external electrode is positioned on the first surface and connected to the connection electrode.

The capacitor body may include a lowermost end dielectric layer configured to adjoin the first surface, and the bypass portion may be positioned in the lowermost end dielectric layer.

The lowermost end dielectric layer may have a larger thickness than the dielectric layer positioned between the plurality of internal electrodes.

The connection electrode may further include a conductive portion connected to the bypass portion. The conductive portion may extend in the stacking direction in the lowermost end dielectric layer, may extend to the first surface, and may be in contact with the external electrode.

The planar direction may include first and second directions orthogonal to each other, and the capacitor body may include third and fourth surfaces facing each other in the first direction. The plurality of internal electrodes may include a plurality of first internal electrodes and a plurality of second internal electrodes alternately positioned one by one in the stacking direction. Edges of the plurality of first internal electrodes may be extended from the third surface, and edges of the plurality of second internal electrodes may be extended from the fourth surface.

The bypass portion may be positioned to extend in the second direction.

The plurality of first internal electrodes may be positioned at a distance from the fourth surface, and the plurality of second internal electrodes may be positioned at a distance from the third surface. The connection electrode may include: a first connection electrode connected to the plurality of first internal electrodes, the first connection electrode may include a first main junction portion positioned between the third surface and the plurality of second internal electrodes; and a second connection electrode connected to the plurality of second internal electrodes, the second connection electrode may include a second main junction portion positioned between the fourth surface and the plurality of first internal electrodes.

The first connection electrode may include a plurality of first connection electrodes, and the second connection electrode may include a plurality of second connection electrodes. The plurality of first connection electrodes may be spaced apart from each other in the second direction, and the plurality of second connection electrodes may be spaced apart from each other in the second direction.

The capacitor body may further include an insulation layer configured to cover the third surface and the fourth surface.

An electronic component according to another embodiment includes a capacitor body, a connection electrode, and an external electrode. The capacitor body includes a dielectric layer, a plurality of internal electrodes disposed in a stacking direction and spaced apart from one another with the dielectric layer interposed therebetween, and first and second surfaces facing each other in the stacking direction. The connection electrode is configured to penetrate the plurality of internal electrodes and connected to the plurality of internal electrodes, and the connection electrode has at least one bent portion in the capacitor body and an end extending from the first surface. The external electrode is positioned on the first surface and connected to the connection electrode.

The at least one bent portion may include a first bent portion. The connection electrode may further include a main junction portion extending in the stacking direction and configured to penetrate the plurality of internal electrodes, and a bypass portion connected to the main junction portion by means the first bent portion and extending in a planar direction in the dielectric layer. The first bent portion may have any one of a shape bent at a right angle and a shape roundly bent.

The at least one bent portion may further include a first bent portion. The connection electrode may further include a conductive portion connected to the bypass portion by the second bent portion. The conductive portion may extend in the stacking direction in the dielectric layer, may extend to the first surface, and may be in contact with the external electrode. The second bent portion may have any one of a shape bent at a right angle and a shape roundly bent.

The capacitor body may further include a lowermost end dielectric layer configured to adjoin the first surface, and the bypass portion and the conductive portion may be positioned in the lowermost end dielectric layer.

The lowermost end dielectric layer may have a larger thickness than the dielectric layer positioned between the plurality of internal electrodes.

The connection electrode may include a plurality of connection electrodes spaced apart from each other.

An electronic component according to an embodiment includes a capacitor body, a connection electrode, and an external electrode. The capacitor body includes a dielectric layer, a plurality of internal electrodes disposed in a stacking direction and spaced apart from one another with the dielectric layer interposed therebetween, and first and second surfaces facing each other in the stacking direction. The connection electrode includes a main junction portion extending in the stacking direction and configured to penetrate the plurality of internal electrodes, a bypass portion connected to the main junction portion and extending in a direction substantially crossing the stacking direction, and an end extending from the first surface. The connection electrode is connected to the plurality of internal electrodes in the capacitor body. The external electrode is positioned on the first surface and connected to the connection electrode.

The connection electrode may further include a conductive portion connected to the bypass portion. In a cross-section of the electronic component in the stacking direction and a direction orthogonal to the stacking direction, a central axis of the main junction portion along the stacking direction may be offset from a central axis of the conductive portion along the stacking direction.

In a cross-section of the electronic component in the stacking direction and a direction orthogonal to the stacking direction, the main junction portion and the conductive portion may not overlap each other along the stacking direction.

The main junction portion may penetrate through at least one internal electrode among the plurality of internal electrodes.

In the electronic component according to the embodiment, the penetration of moisture is blocked by the bypass route in the capacitor body even though the moisture is intended to penetrate into the connection electrode from the outside. Therefore, the electronic component according to the embodiment may improve the moisture resistance reliability by effectively blocking the penetration of moisture into the main junction portion.

### BRIEF DESCRIPTION OF THE DRAWINGS

FIG. 1 is a perspective view illustrating an external shape of an electronic component according to an embodiment.
FIG. 2 is a cross-sectional view of the electronic component taken along line II-II' in FIG. 1.
FIG. 3 is a cross-sectional view of the electronic component taken along line III-III' in FIG. 1.
FIG. 4 is a cross-sectional view of the electronic component taken along line IV-IV' in FIG. 1.
FIG. 5 is an exploded perspective view of a capacitor body of the electronic component illustrated in FIG. 1.
FIGS. 6 and 7 are cross-sectional views illustrating an interior of an electronic component according to another embodiment.

### DETAILED DESCRIPTION OF THE EMBODIMENTS

Hereinafter, embodiments of the present disclosure will be described in detail with reference to the accompanying drawings so that those with ordinary skill in the art to which the present disclosure pertains may easily carry out the embodiments. In the drawings, a part irrelevant to the description will be omitted to clearly describe the present disclosure, and the same or similar constituent elements will be designated by the same reference numerals throughout the specification. Some constituent elements in the accompanying drawings are illustrated in an exaggerated or schematic form or are omitted. A size of each constituent element does not entirely reflect an actual size.

In addition, it should be interpreted that the accompanying drawings are provided only to allow those skilled in the art to easily understand the embodiments disclosed in the present specification.

The terms including ordinal numbers such as "first," "second," and the like may be used to describe various constituent elements, but the constituent elements are not limited by the terms. These terms are used only to distinguish one constituent element from another constituent element.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, the terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof. Therefore, unless explicitly described to the contrary, the word "comprise/include" and variations such as "comprises/includes" or "comprising/including" will be understood to imply the inclusion of stated elements, not the exclusion of any other elements.

Throughout the specification, the word "in a plan view" means when an object is viewed from above, and the word "in a cross-sectional view" means when a cross section made by vertically cutting an object is viewed from a lateral side.

Throughout the specification, when one constituent element is referred to as being "connected to" another constituent element, one constituent element can be "directly connected to" the other constituent element, and one constituent element can also be "indirectly connected to," "physically connected to," or "electrically connected to" the other element with other elements therebetween. Further, the constituent elements are defined as different names according to positions or functions thereof, but the constituent elements may be integrated.

In the present specification, in describing the electronic component, a direction in which main components of the electronic component are stacked is defined as a 'stacking direction' that may be a 'thickness direction'. In addition, a direction parallel to a plane perpendicular to the stacking direction may be defined as a 'planar direction', and the planar direction may include a 'first direction' and a 'second direction' that are orthogonal to each other.

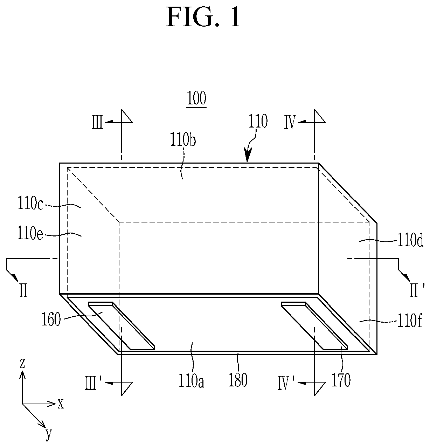

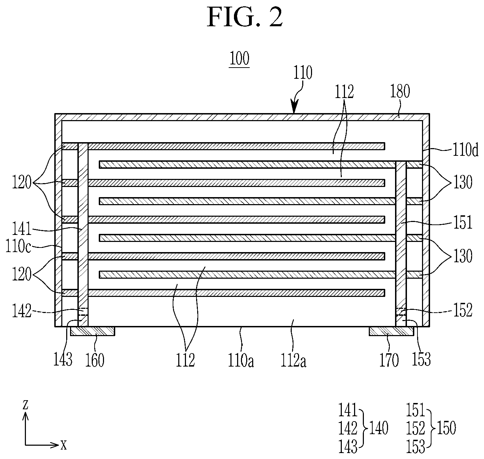

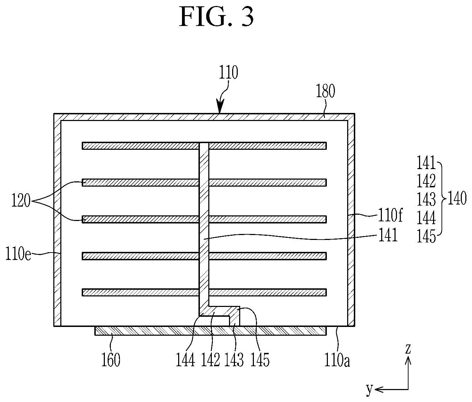

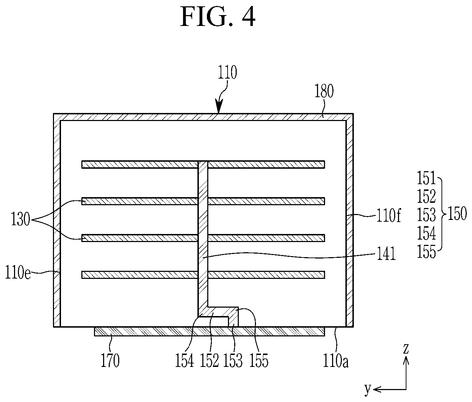

FIG. 1 is a perspective view illustrating an external shape of an electronic component according to an embodiment, and FIG. 2 is a cross-sectional view of the electronic component taken along line II-II' in FIG. 1. FIG. 3 is a cross-sectional view of the electronic component taken along line III-III' in FIG. 1, and FIG. 4 is a cross-sectional view of the electronic component taken along line IV-IV' in FIG. 1.

With reference to FIGS. 1 to 4, an electronic component 100 according to an embodiment is a multilayer ceramic capacitor, and specifically includes a capacitor body 110, a first connection electrode 140, a second connection electrode 150, a first external electrode 160, and a second external electrode 170.

The capacitor body 110 may include a plurality of dielectric layers 112, and a plurality of internal electrodes 120 and 130 disposed in the stacking direction (z-axis direction in the drawings) and spaced apart from one another with one dielectric layer 112 interposed therebetween. The plurality of internal electrodes 120 and 130 may include first and second internal electrodes 120 and 130 alternately positioned in the stacking direction.

The capacitor body 110 may have an approximately hexahedral shape and include first and second surfaces 110a and 110b facing each other in the stacking direction, third and fourth surfaces 110c and 110d facing each other in a first direction (x-axis direction in the drawings), and fifth and sixth surfaces 110e and 110f facing each other in a second direction (y-axis direction in the drawings). The first surface 110a and the second surface 110b may be respectively a lower surface and an upper surface of the capacitor body 110. The third surface 110c and the fourth surface 110d may be respectively a left surface and a right surface of the capacitor body 110. The fifth surface 110e and the sixth surface 110f may be respectively a front surface and a rear surface of the capacitor body 110.

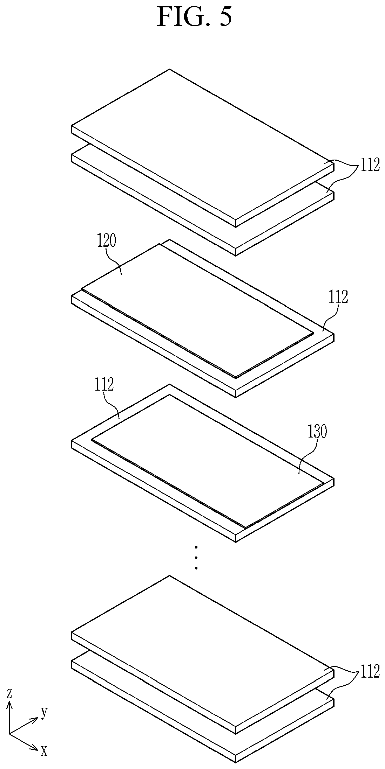

FIG. 5 is an exploded perspective view of a capacitor body of the electronic component illustrated in FIG. 1.

With reference to FIG. 5, the plurality of dielectric layers 112 may be disposed in the stacking direction, any one of the first internal electrode 120 and the second internal electrode 130 is positioned on each of the dielectric layers 112. The first internal electrode 120 and the second internal electrode 130 may be alternately positioned one by one in the stacking direction and each have a smaller area than the dielectric layer 112.

The dielectric layer 112 may include a ceramic material having high permittivity. For example, the ceramic material may include dielectric ceramic containing substances such as BaTiO₃, CaTiO₃, SrTiO₃, or GaZrO₃ . In addition, the ceramic material may further include auxiliary substances such as a Mn compound, a Fe compound, a Cr compound, a Co compound, and a Ni compound in addition to the above-mentioned substances. For example, the ceramic material may be (Ba₁₋ₓCaₓ)TiO₃, Ba(T_{1-y}Ca_{y})O₃, (Ba₁₋ₓCaₓ)(T_{1-y}Zr_{y})O₃, Ba(T_{1-y}Zr_{y})O₃, or the like made by partially applying Ca, Zr, or the like to BaTiO₃-based dielectric ceramic.

The first and second internal electrodes 120 and 130 may be manufactured by printing conductive paste containing metal onto the dielectric layer 112. The first and second internal electrodes 120 and 130 may each include Ni, Cu, Pd, and Ag as main substances.

One side (left) edge of the first internal electrode 120 may overlap, in the stacking direction, one side (left) edge of two opposite side edges of the dielectric layer 112 based on the first direction. The other side (right) edge of the second internal electrode 130 may overlap, in the stacking direction, the other side (right) edge of the two opposite side edges of the dielectric layer 112 based on the first direction. As necessary, the dielectric layers 112 may be additionally disposed at two opposite ends (an uppermost end and a lowermost end) based on the stacking direction.

The capacitor body 110 may be manufactured by disposing the plurality of dielectric layers 112 and the first and second internal electrodes 120 and 130 in the above-mentioned way and then performing a sintering process. In the capacitor body 110 that has been subjected to the sintering process, the plurality of dielectric layers 112 may be integrated to the extent that boundaries therebetween cannot be identified.

With reference back to FIGS. 1 to 4, an edge of the first internal electrode 120 may be exposed from the third surface 110c of the capacitor body 110, and an edge of the second internal electrode 130 may be exposed from the fourth surface 110d of the capacitor body 110. The capacitor body 110 may at least include an insulation layer 180 positioned on the third surface 110c and the fourth surface 110d. The insulation layer 180 may at least cover the third surface 110c and the fourth surface 110d to prevent the edges of the first and second internal electrodes 120 and 130 from being exposed from the outside of the capacitor body 110.

The insulation layer 180 may be positioned on the remaining surfaces of the capacitor body 110, except for the first surface 110a, i.e., positioned on the second to sixth surfaces 110b, 110c, 110d, 110e, and 110f. For example, the insulation layer 180 may be manufactured by coating the second to sixth surfaces 110b, 110c, 110d, 110e, and 110f of the capacitor body 110 with insulating resin and then performing a drying process. The insulation layer 180 serves to improve durability and reliability of the capacitor body 110.

The first connection electrode 140 is connected to the plurality of first internal electrodes 120 in the capacitor body 110, and the second connection electrode 150 is connected to the plurality of second internal electrodes 130 in the capacitor body 110. The first connection electrode 140 and the second connection electrode 150 are positioned at a distance therebetween in the first direction. The ends of the first and second connection electrodes 140 and 150 may be exposed from the first surface 110a of the capacitor body 110.

The first connection electrode 140 may include a main junction portion 141 extending in the stacking direction and configured to penetrate the plurality of first internal electrodes 120, and a bypass portion 142 connected to the main junction portion 141 and extending in a planar direction in the dielectric layer 112. In some embodiments of the application, the bypass portion 142 may extend in a direction substantially crossing the stacking direction. For example, the direction substantially crossing the stacking direction may form an angle of more than 0° and 90° or less with the stacking direction. The second connection electrode 150 may include a main junction portion 151 extending in the stacking direction and configured to penetrate the plurality of second internal electrodes 130, and a bypass portion 152 connected to the main junction portion 151 and extending in the planar direction in the dielectric layer 112.

The main junction portion 141 of the first connection electrode 140 may be positioned to be close to the third surface 110c of the capacitor body 110 so as not to adjoin the second internal electrode 130. That is, the main junction portion 141 of the first connection electrode 140 may be positioned at a distance from the edge of the second internal electrode 130 in the first direction and positioned between the third surface 110c of the capacitor body 110 and the edge of the second internal electrode 130.

The main junction portion 151 of the second connection electrode 150 may be positioned to be close to the fourth surface 110d of the capacitor body 110 so as not to adjoin the first internal electrode 120. That is, the main junction portion 151 of the second connection electrode 150 may be positioned at a distance from the edge of the first internal electrode 120 in the first direction and positioned between the fourth surface 110d of the capacitor body 110 and the edge of the first internal electrode 120.

The main junction portion 141 of the first connection electrode 140 may penetrate the plurality of first internal electrodes 120 and the plurality of dielectric layers 112 in the stacking direction and be in contact with and electrically connected to the plurality of first internal electrodes 120. The main junction portion 151 of the second connection electrode 150 may penetrate the plurality of second internal electrodes 130 and the plurality of dielectric layers 112 in the stacking direction and be in contact with and electrically connected to the plurality of second internal electrodes 130.

One end (lower end) of each of the main junction portions 141 and 151 may be positioned at a distance from the first surface 110a of the capacitor body 110. Specifically, one end (lower end) of each of the main junction portions 141 and 151 may be positioned in a lowermost end dielectric layer (indicated by '112a' in FIG. 2, for convenience) which adjoins the first surface 110a among the plurality of dielectric layers 112 that constitute the capacitor body 110. The lowermost end dielectric layer 112a may be a dielectric layer, which is positioned between a lowermost end internal electrode and the first surface 110a among the plurality of internal electrodes 120 and 130, and have a larger thickness than the dielectric layer 112 positioned between the first internal electrode 120 and the second internal electrode 130. The thickness of each of the dielectric layers may be measured by, for example, scanning electron microscopy. Other methods and/or tools appreciated by one of ordinary skill in the art, even if not described in the present disclosure, may also be used.

The bypass portions 142 and 152 may each be connected to one end (lower end) of each of the main junction portions 141 and 151 in the lowermost end dielectric layer 112a and positioned to extend in the planar direction. The bypass portions 142 and 152 may extend in the second direction (y-axis direction in the drawings) of the planar direction.

Assuming that the bypass portions 142 and 152 extend in the first direction (x-axis direction in the drawings) of the planar direction, a distance between the bypass portions 142 and 152 of the first and second connection electrodes 140 and 150 may become closer, and a distance between the first and second external electrodes 160 and 170 to be described below may become closer. In this case, interference may occur between the first connection electrode 140 and the second connection electrode 150. The bypass portions 142 and 152 may extend in the second direction of the planar direction and prevent the interference between the first and second connection electrodes 140 and 150.

The main junction portions 141 and 151 extend in the stacking direction, and the bypass portions 142 and 152 extend in the second direction, such that the first bent portions 144 and 154 are present between the main junction portions 141 and 151 and the bypass portions 142 and 152. The first bent portions 144 and 154 may each have various shapes such as a shape bent at a right angle or a shape bent roundly while having a predetermined curvature. FIGS. 3 and 4 illustrates the first example. However, the shapes of the first bent portions 144 and 154 are not limited to the illustrated examples.

The first and second connection electrodes 140 and 150 may include conductive portions 143 and 153 connected to ends of the bypass portions 142 and 152. The conductive portions 143 and 153 may extend in the stacking direction in the lowermost end dielectric layer 112a and be exposed from the first surface 110a of the capacitor body 110. That is, the ends of the conductive portions 143 and 153 may be the ends of the first and second connection electrodes 140 and 150.

The bypass portions 142 and 152 extend in the second direction, and the conductive portions 143 and 153 extend in the stacking direction, such that second bent portions 145 and 155 are present between the bypass portions 142 and 152 and the conductive portions 143 and 153. The second bent portions 145 and 155 may each have various shapes such as a shape bent at a right angle or a shape bent roundly while having a predetermined curvature. FIGS. 3 and 4 illustrates the first example. However, the shapes of the second bent portions 145 and 155 are not limited to the illustrated examples.

As described above, the first and second connection electrodes 140 and 150 are connected to the plurality of internal electrodes 120 and 130 by means of the main junction portions 141 and 151. The main junction portions 141 and 151 may be connected to the bypass portions 142 and 152 and the conductive portions 143 and 153 without being exposed directly from the first surface 110a of the capacitor body 110. In the capacitor body 110, the first and second connection electrodes 140 and 150 may each have lengths extended by the bypass portions 142 and 152 and the conductive portions 143 and 153 and each have the two bent portions 144, 145, 154, and 155 in the capacitor body 110.

The first external electrode 160 and the second external electrode 170 may be positioned on the first surface 110a of the capacitor body 110 and positioned at a distance therebetween in the first direction. The first external electrode 160 may be connected to the first connection electrode 140 by coming into contact with the end of the first connection electrode 140, and the second external electrode 170 may be connected to the second connection electrode 150 by coming into contact with the end of the second connection electrode 150. The first and second external electrodes 160 and 170 may be mounted on a circuit board (not illustrated) of an electronic product and electrically connect the plurality of internal electrodes 120 and 130 and the circuit board.

The first and second connection electrodes 140 and 150 may be manufactured by forming through-holes in the capacitor body 110, filling the through-holes with conductive materials, and performing a sintering process. For example, the first and second connection electrodes 140 and 150 may be manufactured by forming through-holes in the capacitor body 110 by using a laser or the like, filling the through-holes with conductive materials containing metal, and then performing a sintering process.

Meanwhile, during the sintering process, fine gaps may be formed around the first and second connection electrodes 140 and 150 because of a difference in contraction percentage between the constituent materials of the capacitor body 110 and the constituent materials of the first and second connection electrodes 140 and 150. Degrees to which the gaps are formed may be different in the main junction portions 141 and 151 and the bypass portions 142 and 152.

Specifically, the main junction portions 141 and 151, the dielectric layer 112, and the internal electrodes 120 and 130 are alternately in contact with one another in the stacking direction. The three types of constituent elements including the main junction portions 141 and 151, the dielectric layer 112, and the internal electrodes 120 and 130 may mechanically interact with one another to produce various changes in contraction percentage. In contrast, the bypass portions 142 and 152 and the conductive portions 143 and 153 are in contact with the single material, i.e., the dielectric layer 112. Therefore, the occurrence of gaps may be further suppressed in the bypass portions 142 and 152 and the conductive portions 143 and 153 than in the main junction portions 141 and 151. The bypass portions 142 and 152 and the conductive portions 143 and 153 may implement very close contact surfaces with the dielectric layer 112.

As a result, even though moisture is intended to penetrate into the main junction portions 141 and 151 from the outside of the electronic component 100, the penetration of moisture is blocked by bypass routes including the conductive portions 143 and 153 and the bypass portions 142 and 152. Therefore, the electronic component 100 according to the embodiment may improve moisture resistance reliability by effectively blocking the penetration of moisture into the main junction portions 141 and 151.

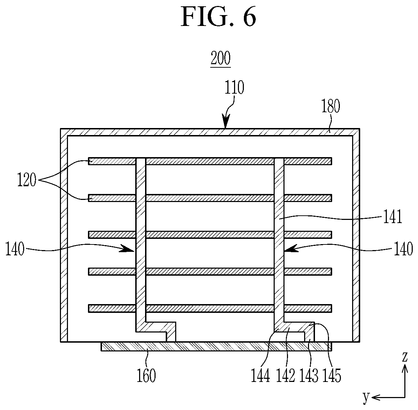

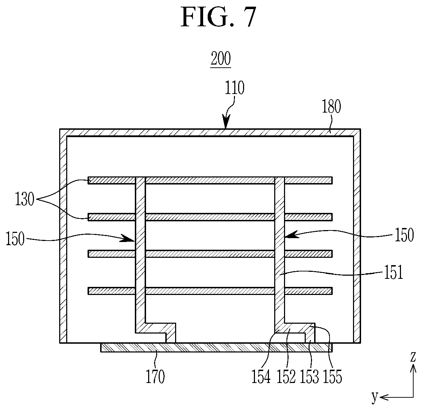

FIGS. 6 and 7 are cross-sectional views illustrating an interior of an electronic component according to another embodiment.

With reference to FIGS. 6 and 7, an electronic component 200 according to the present embodiment may include the same basic configuration as the electronic component 100 according to the embodiment described with reference to FIGS. 1 to 4, except that the first connection electrode 140 is provided as a plurality of first connection electrodes 140, and the second connection electrode 150 is provided as a plurality of second connection electrodes 150.

The plurality of first connection electrodes 140 may be positioned between the third surface 110c (see FIG. 1) of the capacitor body 110 and the plurality of second internal electrodes 130 and positioned at distances therebetween in the second direction. The plurality of second connection electrodes 150 may be positioned between the fourth surface 110d (see FIG. 1) of the capacitor body 110 and the plurality of first internal electrodes 120 and positioned at distances therebetween in the second direction.

The plurality of first connection electrodes 140 may be connected to the first external electrode 160, and the plurality of second connection electrodes 150 may be connected to the second external electrode 170. FIGS. 6 and 7 illustrate that two first connection electrodes 140 and two second connection electrodes 150 are disposed. However, the number of first and second connection electrodes 140 and 150 is not limited to the illustrated example.

In the electronic component 200 of the present embodiment, even though any one of the first connection electrodes 140 or any one of the second connection electrodes 150 is disconnected in the capacitor body 110, another first connection electrode 140 or another second connection electrode 150 may serve to connect the plurality of internal electrodes 120 and 130, thereby implementing an effect of reducing a risk caused by the disconnection.

Next, experiments for evaluating moisture resistance reliability on electronic components according to Example 1, Example 2, and Comparative Example will be described.

The electronic component of Example 1 is the electronic component according to the embodiment described with reference to FIGS. 1 to 4, and the electronic component of Example 2 is the electronic component according to the embodiment described with reference to FIGS. 6 and 7 in which the two first connection electrodes and the two second connection electrodes are provided. The electronic component of Example 2 includes the same basic configuration as the electronic component of Example 1, except for the number of first and second connection electrodes. The electronic component of the Comparative Example includes the same basic configuration as the electronic component of Example 1, except that the first and second connection electrodes are straight shapes parallel to the stacking direction.

Forty electronic components of each of Example 1, Example 2, and Comparative Example were prepared and mounted on circuit boards. Then, moisture resistance reliability was measured by using ESPEC (PR-3J) equipment under a condition of 85°C, relative humidity (R.H.) of 85%, 2Vr (twice a rated voltage), and 300 hours. The results are shown in Table 1 below.

**(Table 1)**

| | Defect rate(%) |
|---|---|
| Comparative Example | 47.5 |
| Example 1 | 0 |
| Example 2 | 0 |

It can be seen that in the case of the electronic component of Comparative Example in which the first and second connection electrodes are straight shapes, an insulation resistance defect occurs on half of the electronic component because of penetration of moisture. In contrast, no insulation resistance defect caused by penetration of moisture occurs on the electronic component of Examples 1 and 2. The electronic components of Examples 1 and 2 may provide the bypass routes on the connection electrode, thereby preventing the insulation resistance defect caused by the penetration of moisture.

While the embodiments of the present disclosure have been described above, the present disclosure is not limited thereto, and various modifications can be made and carried out within the scope of the claims, the detailed description of the disclosure, and the accompanying drawings, and also fall within the scope of the present disclosure.

## Claims

1. An electronic component (100) comprising:
a capacitor body (110) comprising:
a plurality of dielectric layers (112);
a plurality of internal electrodes (120 or 130) disposed in a stacking direction and spaced apart from one another with the dielectric layers interposed therebetween; and
first and second surfaces (110a, 110b) facing each other in the stacking direction;
a connection electrode (140 or 150) comprising:
a main junction portion (141 or 151) extending in the stacking direction and configured to penetrate the plurality of internal electrodes;
a bypass portion (142 or 152) connected to the main junction portion and extending in a planar direction in the dielectric layers; and
an end extending from the first surface, wherein the connection electrode is connected to the plurality of internal electrodes in the capacitor body; and
an external electrode (160 or 170) positioned on the first surface and connected to the connection electrode,
wherein the planar direction comprises first and second directions orthogonal to each other, the capacitor body comprises third and fourth surfaces (110c, 110d) facing each other in the first direction, the plurality of internal electrodes comprises a plurality of first internal electrodes (120) and a plurality of second internal electrodes (130) alternately positioned one by one in the stacking direction, edges of the plurality of first internal electrodes extend from the third surface (110c), and edges of the plurality of second internal electrodes extend from the fourth surface (110d), and the bypass portion is positioned to extend in the second direction.

2. The electronic component (100) of claim 1, wherein:
the capacitor body (110) comprises a lowermost end dielectric layer configured to adjoin the first surface, and
the bypass portion (142 or 152) is positioned in the lowermost end dielectric layer.

3. The electronic component (100) of claim 2, wherein:
the lowermost end dielectric layer has a larger thickness than the dielectric layer positioned between the plurality of internal electrodes.

4. The electronic component (100) of claim 2, wherein:
the connection electrode (140 or 150) further comprises a conductive portion connected to the bypass portion, and
the conductive portion extends in the stacking direction in the lowermost end dielectric layer, extends to the first surface, and is in contact with the external electrode (160 or 170).

5. The electronic component (100) of claim 1, wherein:
the plurality of first internal electrodes (120) is positioned at a distance from the fourth surface, the plurality of second internal electrodes (130) is positioned at a distance from the third surface,
the connection electrode (140 or 150) includes:
a first connection electrode connected to the plurality of first internal electrodes, the first connection electrode comprises a first main junction portion positioned between the third surface and the plurality of second internal electrodes; and a second connection electrode connected to the plurality of second internal electrodes, the second connection electrode comprises a second main junction portion positioned between the fourth surface and the plurality of first internal electrodes.

6. The electronic component (100) of claim 5, wherein:
the first connection electrode includes a plurality of first connection electrodes, the second connection electrode includes a plurality of second connection electrodes,
the plurality of first connection electrodes is spaced apart from each other in the second direction, and
the plurality of second connection electrodes is spaced apart from each other in the second direction; or
wherein:
the capacitor body further comprises an insulation layer configured to cover the third surface and the fourth surface.

7. An electronic component (100) comprising:
a capacitor body (110) comprising:
a plurality of dielectric layers (112);
a plurality of internal electrodes (120 or 130) disposed in a stacking direction and spaced apart from one another with the dielectric layers interposed therebetween; and
first and second surfaces (110a, 110b) facing each other in the stacking direction;
a connection electrode (140 or 150) configured to penetrate the plurality of internal electrodes and connected to the plurality of internal electrodes, the connection electrode comprising at least one bent portion in the capacitor body and an end extending from the first surface; and
an external electrode (160 or 170) positioned on the first surface and connected to the connection electrode,
wherein the connection electrode (140 or 150) further comprises:
a main junction portion (141 or 151) extending in the stacking direction and configured to penetrate the plurality of internal electrodes; and
a bypass portion (142 or 152) connected to the main junction portion by the first bent portion and extending in a planar direction in the dielectric layer,
wherein the planar direction comprises first and second directions orthogonal to each other, the capacitor body comprises third and fourth surfaces (110c, 110d) facing each other in the first direction, the plurality of internal electrodes comprises a plurality of first internal electrodes (120) and a plurality of second internal electrodes (130) alternately positioned one by one in the stacking direction, edges of the plurality of first internal electrodes extend from the third surface (110c), and edges of the plurality of second internal electrodes extend from the fourth surface (110d), and the bypass portion is positioned to extend in the second direction.

8. The electronic component (100) of claim 7, wherein:
the at least one bent portion includes a first bent portion.

9. The electronic component (100) of claim 8, wherein:
the at least one bent portion further includes a second bent portion, and
the connection electrode (140 or 150) further comprises a conductive portion connected to the bypass portion by the second bent portion, where the conductive portion extends in the stacking direction in the dielectric layer, extends to the first surface, and is in contact with the external electrode; and/or
wherein:
the capacitor body (110) further comprises a lowermost end dielectric layer configured to adjoin the first surface, and
the bypass portion (142 or 152) and the conductive portion are positioned in the lowermost end dielectric layer.

10. The electronic component of claim 9, wherein:
the lowermost end dielectric layer has a larger thickness than the dielectric layer positioned between the plurality of internal electrodes.

11. The electronic component of claim 8, wherein:
the connection electrode (140 or 150) includes a plurality of connection electrodes spaced apart from each other.

12. The electronic component (100) of claim 7, wherein
the plurality of first internal electrodes (120) is positioned at a distance from the fourth surface, the plurality of second internal electrodes (130) is positioned at a distance from the third surface,
the connection electrode (140 or 150) includes:
a first connection electrode connected to the plurality of first internal electrodes, the first connection electrode comprises a first main junction portion positioned between the third surface and the plurality of second internal electrodes; and a second connection electrode connected to the plurality of second internal electrodes, the second connection electrode comprises a second main junction portion positioned between the fourth surface and the plurality of first internal electrodes.

## Patentansprüche

1. Elektronikkomponente (100), umfassend:
einen Kondensatorkörper (110), umfassend:
eine Vielzahl von dielektrischen Schichten (112);
eine Vielzahl von Innenelektroden (120 oder 130), die in einer Stapelrichtung angeordnet und voneinander beabstandet sind, wobei zwischen diesen die dielektrischen Schichten angeordnet sind; und
eine erste und zweite Fläche (110a, 110b), die in der Stapelrichtung einander zugewandt sind;
eine Verbindungselektrode (140 oder 150), umfassend:
einen Hauptverbindungsabschnitt (141 oder 151), der sich in der Stapelrichtung erstreckt und zum Durchdringen der Vielzahl von Innenelektroden ausgebildet ist;
einen Überbrückungsabschnitt (142 oder 152), der mit dem Hauptverbindungsabschnitt verbunden ist und sich in einer planaren Richtung in den dielektrischen Schichten erstreckt; und
ein Ende, das sich von der ersten Fläche erstreckt, wobei die Verbindungselektrode mit der Vielzahl von Innenelektroden im Kondensatorkörper verbunden ist; und
eine Außenelektrode (160 oder 170), die auf der ersten Fläche angeordnet und mit der Verbindungselektrode verbunden ist,
wobei die planare Richtung eine erste und eine zweite Richtung umfasst, die zueinander orthogonal sind, der Kondensatorkörper eine dritte und vierte Fläche (110c, 110d) umfasst, die in der ersten Richtung einander zugewandt sind, die Vielzahl von Innenelektroden eine Vielzahl von ersten Innenelektroden (120) und eine Vielzahl von zweiten Innenelektroden (130) umfasst, die abwechselnd einzeln in der Stapelrichtung angeordnet sind, sich Kanten der Vielzahl von ersten Innenelektroden von der dritten Fläche (110c) erstrecken und sich Kanten der Vielzahl von zweiten Innenelektroden von der vierten Fläche (110d) erstrecken und der Überbrückungsabschnitt so angeordnet ist, dass er sich in der zweiten Richtung erstreckt.

2. Elektronikkomponente (100) nach Anspruch 1, wobei:
der Kondensatorkörper (110) eine dielektrische Schicht am untersten Ende umfasst, die zum Angrenzen an die erste Fläche ausgebildet ist, und
der Überbrückungsabschnitt (142 oder 152) in der dielektrischen Schicht am untersten Ende angeordnet ist.

3. Elektronikkomponente (100) nach Anspruch 2, wobei:
die dielektrische Schicht am untersten Ende eine größere Dicke aufweist als die dielektrische Schicht, die zwischen der Vielzahl von Innenelektroden angeordnet ist.

4. Elektronikkomponente (100) nach Anspruch 2, wobei:
die Verbindungselektrode (140 oder 150) ferner einen leitfähigen Abschnitt aufweist, der mit dem Überbrückungsabschnitt verbunden ist, und
sich der leitfähige Abschnitt in der Stapelrichtung in der dielektrischen Schicht am untersten Ende erstreckt, sich bis zur ersten Fläche erstreckt und in Kontakt mit der Außenelektrode (160 oder 170) steht.

5. Elektronikkomponente (100) nach Anspruch 1, wobei:
die Vielzahl von ersten Innenelektroden (120) in einem Abstand zu vierten Fläche angeordnet ist und die Vielzahl von zweiten Innenelektroden (130) in einem Abstand zur dritten Fläche angeordnet ist,
die Verbindungselektrode (140 oder 150) umfasst:
eine erste Verbindungselektrode, die mit der Vielzahl von ersten Innenelektroden verbunden ist, wobei die erste Verbindungselektrode einen ersten Hauptverbindungsabschnitt umfasst, der zwischen der dritten Fläche und der Vielzahl von zweiten Innenelektroden angeordnet ist; und eine zweite Verbindungselektrode, die mit der Vielzahl von zweiten Innenelektroden verbunden ist, wobei die zweite Verbindungselektrode einen zweiten Hauptverbindungsabschnitt umfasst, der zwischen der vierten Fläche und der Vielzahl von ersten Innenelektroden angeordnet ist.

6. Elektronikkomponente (100) nach Anspruch 5, wobei:
die erste Verbindungselektrode eine Vielzahl von ersten Verbindungselektroden umfasst und die zweite Verbindungselektrode eine Vielzahl von zweiten Verbindungselektroden umfasst,
die Vielzahl von ersten Verbindungselektroden in der zweiten Richtung voneinander beabstandet ist, und
die Vielzahl von zweiten Verbindungselektroden in der zweiten Richtung voneinander beabstandet ist; oder
wobei:
der Kondensatorkörper ferner eine Isolierschicht umfasst, die zum Abdecken der dritten und der vierten Fläche ausgebildet ist.

7. Elektronikkomponente (100), umfassend:
einen Kondensatorkörper (110), umfassend:
eine Vielzahl von dielektrischen Schichten (112);
eine Vielzahl von Innenelektroden (120 oder 130), die in einer Stapelrichtung angeordnet und voneinander beabstandet sind, wobei zwischen diesen die dielektrischen Schichten angeordnet sind; und
eine erste und zweite Fläche (110a, 110b), die in der Stapelrichtung einander zugewandt sind;
eine Verbindungselektrode (140 oder 150), die zum Durchdringen der Vielzahl von Innenelektroden ausgebildet und mit der Vielzahl von Innenelektroden verbunden ist, wobei die Verbindungselektrode wenigstens einen gebogenen Abschnitt im Kondensatorkörper und ein sich von der ersten Fläche erstreckendes Ende umfasst; und
eine Außenelektrode (160 oder 170), die auf der ersten Fläche angeordnet und mit der Verbindungselektrode verbunden ist,
wobei die Verbindungselektrode (140 oder 150) ferner umfasst:
einen Hauptverbindungsabschnitt (141 oder 151), der sich in der Stapelrichtung erstreckt und zum Durchdringen der Vielzahl von Innenelektroden ausgebildet ist; und
einen Überbrückungsabschnitt (142 oder 152), der mit dem Hauptverbindungsabschnitt durch den ersten gebogenen Abschnitt verbunden ist und sich in einer planaren Richtung in der dielektrischen Schicht erstreckt,
wobei die planare Richtung eine erste und eine zweite Richtung umfasst, die zueinander orthogonal sind, der Kondensatorkörper eine dritte und vierte Fläche (110c, 110d) umfasst, die in der ersten Richtung einander zugewandt sind, die Vielzahl von Innenelektroden eine Vielzahl von ersten Innenelektroden (120) und eine Vielzahl von zweiten Innenelektroden (130) umfasst, die abwechselnd einzeln in der Stapelrichtung angeordnet sind, sich Kanten der Vielzahl von ersten Innenelektroden von der dritten Fläche (110c) erstrecken und sich Kanten der Vielzahl von zweiten Innenelektroden von der vierten Fläche (110d) erstrecken und der Überbrückungsabschnitt so angeordnet ist, dass er sich in der zweiten Richtung erstreckt.

8. Elektronikkomponente (100) nach Anspruch 7, wobei:
der wenigstens eine gebogene Abschnitt einen ersten gebogenen Abschnitt umfasst.

9. Elektronikkomponente (100) nach Anspruch 8, wobei:
der wenigstens eine gebogene Abschnitt ferner einen zweiten gebogenen Abschnitt umfasst, und
die Verbindungselektrode (140 oder 150) ferner einen leitfähigen Abschnitt umfasst, der durch den zweiten gebogenen Abschnitt mit dem Überbrückungsabschnitt verbunden ist, wobei sich der leitfähige Abschnitt in der Stapelrichtung in der dielektrischen Schicht erstreckt, sich bis zur ersten Fläche erstreckt und mit der Außenelektrode in Kontakt steht; und/oder
wobei:
der Kondensatorkörper (110) ferner eine dielektrische Schicht am untersten Ende umfasst, die zum Angrenzen an die erste Fläche ausgebildet ist, und
der Überbrückungsabschnitt (142 oder 152) und der leitfähige Abschnitt in der dielektrischen Schicht am untersten Ende angeordnet sind.

10. Elektronikkomponente nach Anspruch 9, wobei:
die dielektrische Schicht am untersten Ende eine größere Dicke aufweist als die dielektrische Schicht, die zwischen der Vielzahl von Innenelektroden angeordnet ist.

11. Elektronikkomponente nach Anspruch 8, wobei:
die Verbindungselektrode (140 oder 150) eine Vielzahl von voneinander beabstandeten Verbindungselektroden umfasst.

12. Elektronikkomponente (100) nach Anspruch 7, wobei
die Vielzahl von ersten Innenelektroden (120) in einem Abstand zur vierten Fläche angeordnet ist und die Vielzahl von zweiten Innenelektroden (130) in einem Abstand zur dritten Fläche angeordnet ist,
die Verbindungselektrode (140 oder 150) umfasst:
eine erste Verbindungselektrode, die mit der Vielzahl von ersten Innenelektroden verbunden ist, wobei die erste Verbindungselektrode einen ersten Hauptverbindungsabschnitt umfasst, der zwischen der dritten Fläche und der Vielzahl von zweiten Innenelektroden angeordnet ist; und
eine zweite Verbindungselektrode, die mit der Vielzahl von zweiten Innenelektroden verbunden ist, wobei die zweite Verbindungselektrode einen zweiten Hauptverbindungsabschnitt umfasst, der zwischen der vierten Fläche und der Vielzahl von ersten Innenelektroden angeordnet ist.

## Revendications

1. Composant électronique (100) comprenant :
un corps de condensateur (110) comprenant :
une pluralité de couches diélectriques (112) ;
une pluralité d'électrodes internes (120 ou 130) disposées dans une direction d'empilement et espacées les unes des autres, les couches diélectriques étant interposées entre celles-ci ; et
des première et deuxième surfaces (110a, 110b) se faisant face dans la direction d'empilement ;
une électrode de connexion (140 ou 150) comprenant :
une portion de jonction principale (141 ou 151) s'étendant dans la direction d'empilement et configurée pour pénétrer dans la pluralité d'électrodes internes ;
une portion de dérivation (142 ou 152) connectée à la portion de jonction principale et s'étendant dans les couches diélectriques dans une direction planaire ; et
une extrémité s'étendant à partir de la première surface, dans lequel l'électrode de connexion est connectée à la pluralité d'électrodes internes dans le corps de condensateur ; et
une électrode externe (160 ou 170) positionnée sur la première surface et connectée à l'électrode de connexion,
dans lequel la direction planaire comprend une première direction et une seconde direction orthogonales l'une à l'autre, le corps de condensateur comprend des troisième et quatrième surfaces (110c, 110d) se faisant face dans la première direction, la pluralité d'électrodes internes comprend une pluralité de premières électrodes internes (120) et une pluralité de secondes électrodes internes (130) positionnées alternativement une par une dans la direction d'empilement, des bords de la pluralité de premières électrodes internes s'étendent depuis la troisième surface (110c), et des bords de la pluralité de secondes électrodes internes s'étendent depuis la quatrième surface (110d), et la portion de dérivation est positionnée de manière à s'étendre dans la seconde direction.

2. Composant électronique (100) selon la revendication 1, dans lequel :
le corps de condensateur (110) comprend une couche diélectrique d'extrémité la plus basse, configurée pour être adjacente à la première surface, et
la portion de dérivation (142 ou 152) est positionnée dans la couche diélectrique d'extrémité la plus basse.

3. Composant électronique (100) selon la revendication 2, dans lequel :
la couche diélectrique d'extrémité la plus basse a une épaisseur supérieure à celle de la couche diélectrique positionnée entre la pluralité d'électrodes internes.

4. Composant électronique (100) selon la revendication 2, dans lequel :
l'électrode de connexion (140 ou 150) comprend en outre une portion conductrice connectée à la portion de dérivation, et
la portion conductrice s'étend dans la direction d'empilement dans la couche diélectrique d'extrémité la plus basse, s'étend jusqu'à la première surface, et est en contact avec l'électrode externe (160 ou 170).

5. Composant électronique (100) selon la revendication 1, dans lequel :
la pluralité de premières électrodes internes (120) est positionnée à une distance de la quatrième surface, la pluralité de secondes électrodes internes (130) est positionnée à une distance de la troisième surface,
l'électrode de connexion (140 ou 150) comporte :
une première électrode de connexion connectée à la pluralité de premières électrodes internes, la première électrode de connexion comprend une première portion de jonction principale positionnée entre la troisième surface et la pluralité de secondes électrodes internes ; et une seconde électrode de connexion connectée à la pluralité de secondes électrodes internes, la seconde électrode de connexion comprend une seconde portion de jonction principale positionnée entre la quatrième surface et la pluralité de premières électrodes internes.

6. Composant électronique (100) selon la revendication 5, dans lequel :
la première électrode de connexion comporte une pluralité de premières électrodes de connexion, la seconde électrode de connexion comporte une pluralité de secondes électrodes de connexion,
la pluralité de premières électrodes de connexion sont espacées les unes des autres dans la seconde direction, et
la pluralité de secondes électrodes de connexion sont espacées les unes des autres dans la seconde direction ; ou
dans lequel :
le corps de condensateur comprend en outre une couche d'isolation configurée pour recouvrir la troisième surface et la quatrième surface.

7. Composant électronique (100) comprenant :
un corps de condensateur (110) comprenant :
une pluralité de couches diélectriques (112) ;
une pluralité d'électrodes internes (120 ou 130) disposées dans une direction d'empilement et espacées les unes des autres, les couches diélectriques étant interposées entre celles-ci ; et
des première et deuxième surfaces (110a, 110b) se faisant face dans la direction d'empilement ;
une électrode de connexion (140 ou 150) configurée pour pénétrer dans la pluralité d'électrodes internes et connectée à la pluralité d'électrodes internes, l'électrode de connexion comprenant au moins une portion coudée dans le corps de condensateur et une extrémité s'étendant à partir de la première surface ; et
une électrode externe (160 ou 170) positionnée sur la première surface et connectée à l'électrode de connexion,
dans lequel l'électrode de connexion (140 ou 150) comprend en outre :
une portion de jonction principale (141 ou 151) s'étendant dans la direction d'empilement et configurée pour pénétrer dans la pluralité d'électrodes internes ; et
une portion de dérivation (142 ou 152) connectée à la portion de jonction principale par la première portion coudée et s'étendant dans la couche diélectrique, dans une direction planaire,
dans lequel la direction planaire comprend une première direction et une seconde direction orthogonales l'une à l'autre, le corps de condensateur comprend des troisième et quatrième surfaces (110c, 110d) se faisant face dans la première direction, la pluralité d'électrodes internes comprend une pluralité de premières électrodes internes (120) et une pluralité de secondes électrodes internes (130) positionnées alternativement une par une dans la direction d'empilement, des bords de la pluralité de premières électrodes internes s'étendent depuis la troisième surface (110c), et des bords de la pluralité de secondes électrodes internes s'étendent depuis la quatrième surface (110d), et la portion de dérivation est positionnée de manière à s'étendre dans la seconde direction.

8. Composant électronique (100) selon la revendication 7, dans lequel :
ladite au moins une portion coudée comporte une première portion coudée.

9. Composant électronique (100) selon la revendication 8, dans lequel :
ladite au moins une portion coudée comporte en outre une seconde portion coudée, et
l'électrode de connexion (140 ou 150) comprend en outre une portion conductrice connectée à la portion de dérivation par la seconde portion coudée, où la portion conductrice s'étend dans la direction d'empilement dans la couche diélectrique,
s'étend jusqu'à la première surface, et est en contact avec l'électrode externe ; et/ou dans lequel :
le corps de condensateur (110) comprend en outre une couche diélectrique d'extrémité la plus basse, configurée pour être adjacente à la première surface, et
la portion de dérivation (142 ou 152) et la portion conductrice sont positionnées dans la couche diélectrique d'extrémité la plus basse.

10. Composant électronique selon la revendication 9, dans lequel :
la couche diélectrique d'extrémité la plus basse a une épaisseur supérieure à celle de la couche diélectrique positionnée entre la pluralité d'électrodes internes.

11. Composant électronique selon la revendication 8, dans lequel :
l'électrode de connexion (140 ou 150) comporte une pluralité d'électrodes de connexion espacées les unes des autres.

12. Composant électronique (100) selon la revendication 7, dans lequel la pluralité de premières électrodes internes (120) est positionnée à une distance de la quatrième surface, la pluralité de secondes électrodes internes (130) est positionnée à une distance de la troisième surface,
l'électrode de connexion (140 ou 150) comporte :
une première électrode de connexion connectée à la pluralité de premières électrodes internes, la première électrode de connexion comprend une première portion de jonction principale positionnée entre la troisième surface et la pluralité de secondes électrodes internes ; et une seconde électrode de connexion connectée à la pluralité de secondes électrodes internes, la seconde électrode de connexion comprend une seconde portion de jonction principale positionnée entre la quatrième surface et la pluralité de premières électrodes internes.
